# EUROPEAN PATENT SPECIFICATION

(11) **EP 1 229 412 B1**
(45) Date of publication and mention of the grant of the patent: **09.08.2006**
(21) Application number: 01113352.7
(22) Date of filing: 01.06.2001
(51) Int. Cl.: G05B 19/402, G05B 19/418

(54) **Machining centre for the edges of panels**
Bearbeitungsvorrichtung für Paneelkanten
Machine pour travailler les bords d'un panneau

(30) Priority: 31.01.2001 IT BO010046
(43) Date of publication of application: 07.08.2002
(73) Proprietor: SORBINI S.r.l., 61100 Pesaro (IT)
(72) Inventor: Sorbini, Roberto, 61100 Pesaro (PU) (IT); Filippini, Fabrizio, 61100 Pesaro (PU) (IT)
(74) Representative: Porsia, Dino

(56) References cited:
- DE-A- 4 128 194
- DE-A- 10 030 997
- DE-C- 19 835 168
- US-A- 4 163 313
- US-A- 5 333 370

## Description

The invention relates to a numerically controlled machining centre for automatically executing all the operations required to finish the edges of panels and surfaces for the furniture industry, such as the operations of sanding, applying a colour and drying it, applying a filler paint and hardening it, and the final sanding and polishing of the painted surface.

In particular, the invention relates to constructional and functional improvements to the numerically controlled machining centre described in patent application No. MI98A-2474 in the name of the present applicant, which, briefly, comprises a rotating table with a vertical axis, which is provided with vacuum means to hold the panel horizontally and by the centre of gravity, and is mounted on a pair of horizontal sliders which are orthogonal to each other. The units for working the edge of the panel are mounted side by side on a slider parallel to the traversing slider of the rotating table. A processing unit is provided for learning the shape and orientation of the panel, and controls the movements of the assembly consisting of the rotating table combined with the corresponding sliders and the slider combined with the working unit, in such a way that the edge of the panel is worked cyclically by the various working units, according to a predetermined program.

Document DE 100 30 997 discloses a machine for the working of wood panels comprising:
- a rotating table with vacuum means designed to support the panel to be worked, with the axis of rotation of this table which is mounted on at least two horizontal guide and slider groups orthogonal to each other;
- a carousel on which two or more units for working the edges of panels are located at predetermined angular intervals, and can be moved selectively to a predetermined position of approach to the rotating table carrying the panel to be worked;
- a processing and control unit capable of controlling the motors of the rotating table to move the edge of the panel so that it interacts with the cyclically positioned working unit, and capable of controlling the motor of the working unit positioning carousel according to a predetermined operating program.

According to the present invention, there is provided an automatic machining centre in accordance with the features of appended claim 1.

The objects and characteristics of the invention, and the advantages derived therefrom, will be evident from the following description of a preferred embodiment of the invention, illustrated purely by way of example and without restrictive intent in the figures on the attached sheets of drawings, in which
- Fig. 1 is a schematic plan view of the machining centre according to the invention;
- Fig. 2 shows other details of the centre, in a view taken through the section line II-II in Figure 1;
- Fig. 3 is a schematic side view of the automatic means for positioning the panels in the appropriate station for loading the rotating table;
- Fig. 3a is a lateral view of the moving strip for the initial positioning and centring of the panel, at the end of its active operating path;
- Figs. 4 and 5 are schematic plan views of the means for the second positioning and centring of the panels in the appropriate station for loading the rotating table, shown when acting on panels of different shapes,
- Fig. 4a is a plan view of the details of the means for the second positioning and centring of the panels.

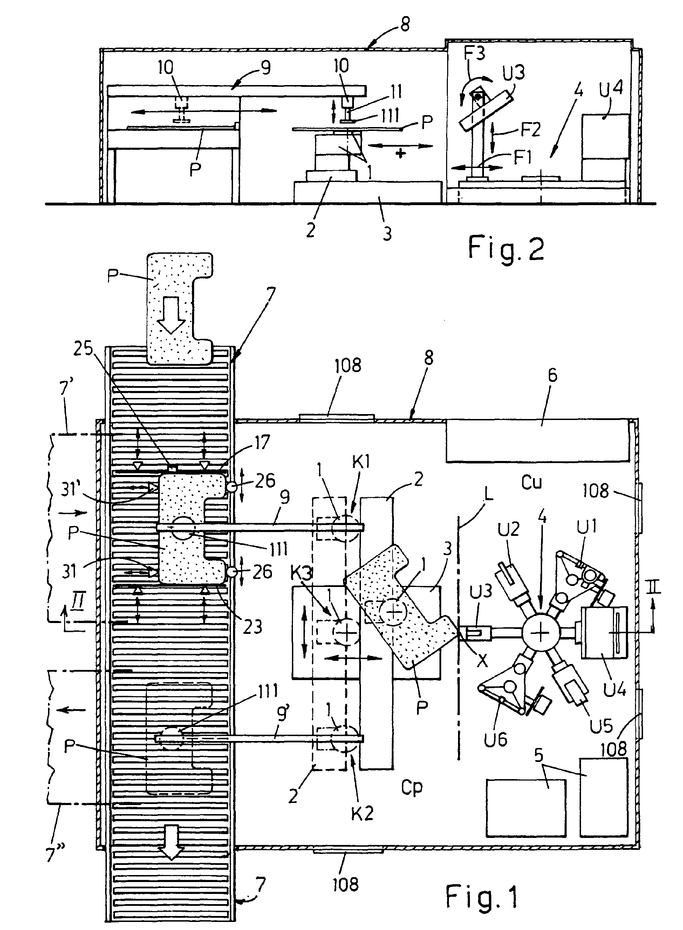

In Figures 1 and 2, the number 1 indicates a rotating table with a vertical axis, this moving unit being provided with vacuum means and designed to support and to secure horizontally the panel P to be worked, whose centre of gravity is aligned with the axis of rotation of this gripping unit. The rotating table 1 is mounted on a pair of horizontal orthogonal guides 2 and 3, and all these components are driven by corresponding motors with electronic speed and phase control, and are designed so that the panel secured on the table 1 can be moved in such a way as to position the various points of its edge progressively at a point X of a line L which is the theoretical separating line between the area Cp where the parts 1, 2 and 3 for moving the panel act and the area Cu in which the various stations for working the panel are located. This is achieved by providing in the area Cu, in alignment with the longitudinal midline axis of the slider 3, perpendicular to the line L, a carousel 4, having for example a vertical axis (see below), on which are mounted at predetermined angular intervals the various working units U of the machining centre which is to be produced, including for example a unit for initial sanding with a belt and/or lapping wheel U1, a vacuum painting unit U2, an infrared drying unit U3, an ultraviolet catalysing unit U4, a spray painting unit U5, and a fine sanding unit U6. Clearly, the number and type of the working units located on the carousel 4 can vary according to the working cycles which are to be carried out on the edges of the panels, without departure from the scope of the invention. Each working unit, or at least its working head, is fixed to the carousel 4 in such a way that when the working unit is in the angular position of maximum closeness to the slider 3, the corresponding working head can act on the edge of the panel P located on the table 1, at a predetermined point of the boundary line L, such as the aforesaid point X. The carousel 4 is provided with remotely controllable precision movement means which can cyclically bring the heads of the various working units to the said point X. For this purpose, and also to make it possible to act on panel edges with convex profiles, the working units are mounted on the carousel 4 in such a way that they can execute at least the following types of movement: a horizontal rectilinear movement towards and away from the panel P, as indicated by F1; a vertical rectilinear rising and lowering movement as indicated by F2; and an oscillation about a horizontal axis parallel to the boundary line L, as indicated by F3.

The components 5 for supplying the working units, and suction means, are located on one side of the carousel 4, while the electrical control and processing unit 6, which controls the automatic operation of all the motors of the component parts of the machining centre, including those used to supply a panel to the table 1 and remove it therefrom, is located on the other side.

The means of supplying and removing the panels are provided opposite the positioning carousel 4, and can, for example, consist of a rectilinear horizontal motorized roller conveyor 7, parallel to the theoretical line L, with the rollers perpendicular to this line, or can consist of two rectilinear motorized roller conveyors 7', 7" parallel to each other and perpendicular to the said line L and therefore having their rollers parallel to this line, as illustrated in Figure 1 with a broken line, so that they can be served by the same operator. Parts of the aforesaid roller conveyors are located inside a chamber 8 which contains all the described parts of the machining centre, including the processing and control unit 6 which advantageously has its operating parts facing towards the outside so that they can be operated and controlled by personnel located outside the chamber 8. Depending on the type of working units mounted on the carousel 4, the chamber 8 can be a simple soundproof chamber or can also comprise a known ventilation and filtration system (not illustrated), for collecting and suppressing solvents, fine particles of paint and/or of the panel material given off by the sanding. The ventilation and filtration system will be such that the chamber is kept at a slightly lower pressure than the external environment, so that air from the exterior enters through the apertures through which the panel supply and removal roller conveyors pass. The chamber is also provided with suitable service hatches, indicated for example by 108.

Inside the chamber 8, and running between the portion of roller conveyor which supplies the panels and the stations K1 and K2 at which the rotating table 1 is cyclically positioned for picking up and discharging the panels, as shown in Figure 1 in dashed lines and in chained lines respectively, there are located respective overhead guides 9, 9', which are rectilinear, fixed and perpendicular to the boundary line L, and on which there run corresponding carriages 10, each of which carries an elevator 11, with a head 111 provided with suction means for picking up a panel.

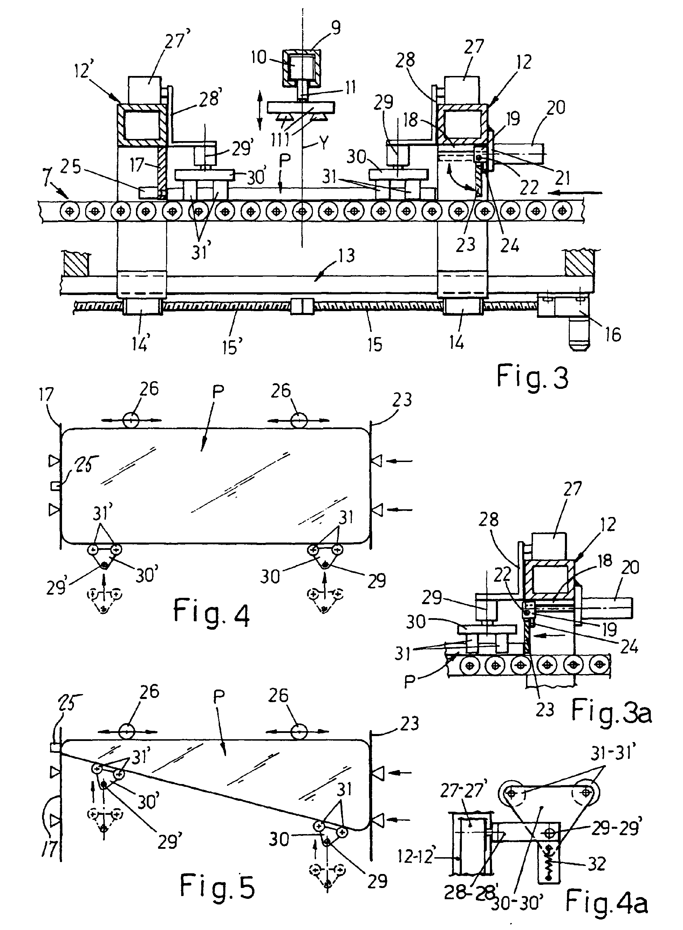

As shown in Figure 3, two gantry structures 12, 12' are placed above and across the portion of the roller conveyor 7 which serves the panel loading station K1, and the uprights of these structures run on rectilinear fixed guides 13 and are connected to a self-centring movement system whose zero reference point is the theoretical vertical plane Y containing the centre of the pick-up head 111, the said system consisting, for example, of nuts 14, 14' integral with the gantries and interacting with right- and left-hand screws 15, 15' which are parallel to the guides 13 and are driven by a geared motor 16 controlled by the processing centre 6. According to the shape and dimensions of the panels P to be worked, which are fed on the roller conveyor 7 with their greatest dimension orientated in the direction of advance of the roller conveyor (Fig. 1), the gantry structures 12, 12' are automatically positioned in such a way that a strip 17, fixed longitudinally to the cross-member of the gantry 12' and orientated downwards, so that it practically touches the roller conveyor 7, is located at a distance of approximately half the length of the panel from the axis Y. On the cross-member of the gantry 12 there are mounted transverse guides 18 on which runs a carriage 19 connected to the rods, parallel to the said guides, of pneumatic jacks 20 whose bodies are fixed to brackets 21 integral with the said cross-member. The carriage 19 is linked by a pivot at 22 to a strip 23 which is orientated downwards, which extends almost to the roller conveyor 7, and whose surface facing the cylinders 20 normally bears on adjustable stops 24 carried by projections integral with the carriage 19. When the panel P fed from the motorized roller conveyor 7 reaches the gantry 12, it pushes against and thus raises the oscillating strip 23 which then drops by gravity as soon as the panel has passed it. When the panel comes into contact with the fixed strip 17, opto-electronic sensors 25 detect this condition, cause the roller conveyor 7 to stop and cause the activation of the cylinders 20 which bring the strip 23 towards the panel in such a way that the panel is positioned correctly in contact with the strips 17 and 23 in question. At this stage, the strip 23 remains vertical because it bears on the rear stops 24. Pressure switches connected to the outlets of the cylinders 20 detect the correct positioning and alignment of the panel between the said first centring strips, and cause the activation of the means described below. Figures 1 and 4 show that at least one pair of rollers or vertical stops 26, whose position is adjustable with symmetrical spacing from the reference plane Y, is provided on the side of the roller conveyor 7 facing the rotating table 1. On the cross-members of the gantries 12, 12' there are longitudinally mounted pneumatically operated linear servo systems 27, 27' (Figs. 3 and 4), whose moving parts are fixed to arms 28, 28' orientated in the space lying between the said gantries and which are linked by vertical pivots at 29, 29' to horizontal plates 30, 30' which carry pairs of vertical rollers 31, 31' orientated downwards and extending almost as far as the roller conveyor 7. By the action of elastic means 32 (Fig. 4a) acting on the ends of the plates 30, 30' and fixed to extensions of the arms 28, 28', the rollers 31, 31' are kept constantly facing the panel to be positioned, and can adapt to shapes which are not necessarily rectilinear and inclined (Fig. 5) of the sides of the panels to be positioned. The plates with the rollers 31, 31' are normally in a retracted rest position so that they do not interfere with the panel which is inserted between the gantries 12, 12', and it is only when the command is issued by the limit pressure switches of the cylinders 20 that the linear servo systems 27, 27' are activated to make the pairs of rollers 31, 31' push the opposite side of the panel against the fixed stops 26, while the pressure of the cylinders 20 is reduced or the cylinders are retracted slightly, at the correct time, to prevent the panel from scraping against the strips 17, 23. If the panel to be positioned has an inclined side facing the pushing rollers 31, 31', as in the example shown in Figure 5, the plates 30, 30' with the said rollers can be placed in a starting position such that they subsequently come into contact with the panel after travelling over equal distances. The cylinders which drive the moving units of the servo systems 27, 27' are also provided with pressure switches which detect the limit of travel of the rollers 31, 31' and which cause the cylinders 20 to come into operation subsequently so that the panel is again pressed against the strips 17 and 23.

When the two pressing and centring systems have both completed their active operating strokes, the pick-up head 111 is made to descend, after it has been positioned in the meantime exactly over the centre of gravity of the panel, the carriage 10 being driven by a motor with electronic speed and phase control, operated by the control unit 6. When the panel has been picked up by the head 111, the aforesaid approach means return to the rest position, and the panel is raised by the said head 111 and transferred to the rotating table 1 which is standing at the station K1, after which the said head 111 returns to the wait position to pick up a subsequent panel.

Clearly, means equivalent to those described can be provided to automate the supplying of the panel to the pick-up head 111, even when the supply and discharge roller conveyors are in the positions shown by 7' and 7" in Figure 1. If the roller conveyors are in these different locations, since the working times of the centre are relatively long and since there is ample time available for the correct positioning of a panel in the centring station for picking up by the head 111, the positioning of the panel against the appropriate reference means can alternatively be carried out manually by an operator, the whole being done in a way which is evident to and easily mastered by persons skilled in the art.

The machining centre according to the invention operates in the following way. Using a suitable control program, the operator enters into the panel of the control and processing unit 6 the characteristics relating to the shape and dimensions of the panel or panels to be worked and the sequence of the different working stages which are to be carried out on the panel. Clearly, this stage of data entry is carried out only at the start of operation or with a change in the shape of the panels or in the stages of the operating cycle which is to be carried out from time to time by the machining centre. The operating cycles, the positions of the stops in the panel centring station on the roller conveyor 7 and the different shapes of the panels which have already been treated can be recalled from the memory of the unit 6 by easily memorized codes, thus permitting virtually instant programming of the centre in the case of panels or operating cycles which are already known to the said unit 6.

Alternatively, the stage of learning the shape and dimensions of the panel can be automated by providing the machining centre with known feelers or sensors of the mechanical or opto-electronic type, by means of which the unit 6 can detect the aforesaid characteristics of the panel.

The panel supplied by the roller conveyor 7 is correctly positioned next to the pick-up device 111 of the guide 9 as described above, is picked up and transferred to the rotating table 1 positioned at the loading station K1 and designed to grip the panel in such a way that its centre of gravity is precisely aligned with the axis of rotation of the table. Meanwhile, according to the particular operating program which has been selected, the unit 6 causes the carousel 4 to rotate so that the first working unit is positioned at the point X of the theoretical boundary line L. If parts of the edge of the panel have a concave shape, as shown in Figure 1, the selected working unit is extended by means of the horizontal movement slider F1 so that it is spaced farther from the adjacent working units, in order that these do not interfere with the panel to be worked, whose edge is progressively made to interact with the active working unit.

The unit 6 controls the movement of the sliders 2 and 3 and the rotation of the rotating table 1, and, according to the shape and dimensions of the panel placed on the table 1, brings all the points of the edge of the panel, or of the portion of its edge which is to be worked, in an ordered sequence up to the working head positioned at the point X. As stated previously, in order to simplify the programming of the unit 6, the active working unit remains stationary at the point X where it can if necessary be given rising or lowering movements F2 and oscillatory movements F3 about an axis parallel to the line L, while any further movement required for working the edge of the panel is provided by the rotation of the table 1 and the combined movement of the latter on the orthogonal sliders 2 and 3.

When a working unit has completed its task, the assembly 1, 2, 3 brings the panel to the position K3 of greatest distance from the carousel 4 which is activated at the correct time to bring the next working unit to the point X, according to the preset operating program, and the whole cycle is repeated until the edge of the panel has been fully worked.

On completion of the different working operations, which may require the use of the working units on the carousel 4 on one or more occasions, the rotating table 1 is brought to the station K2 where the gripping head 111 of the guide 9' picks up the worked panel and transfers it to the final discharge portion of the roller conveyor 7 or to the roller conveyor 7" which is dedicated to this function.

In the meantime, the carousel 4 is prepared for the start of a subsequent operating cycle, and the gripping head 111 of the guide 9 is prepared to transfer a subsequent panel to the loading station K1, so that when the worked panel has been discharged the rotating table 1 can traverse directly from K2 to K1 to pick up the next panel.

Clearly, the description relates to a preferred embodiment of the invention, to which numerous constructional changes can be made, which may for example entail having the carousel 4 with its axis suitably inclined at an angle in the range from zero to ninety degrees to the vertical, and with its highest or lowest point facing the assembly of the table 1 and the sliders 2 and 3. This variant would offer the advantage that the cyclically active working unit would be at a higher or lower level than the subsequent units which would thus not interfere with the edge of the panel, even if this passes over the boundary line L during its movement by the assembly 1, 2, 3. This variant would therefore make it possible to limit the movement of the working units in the radial direction indicated by F1.

## Claims

1. Automatic machining centre for the edges of panels or surfaces for the furniture industry, comprising:
- a rotating table (1), with vacuum means designed to support the panel to be worked in such a way that its centre of gravity is aligned with the axis of rotation of this table which is mounted on at least two horizontal guide and slider groups orthogonal to each other (2, 3), these means being driven by corresponding motors with electronic speed and phase control;
- a carousel (4) on which two or more units (U) for working the edges of panels are located at predetermined angular intervals, and can be moved selectively by precise rotation means of the carousel to a predetermined position of approach to the rotating table (1) carrying the panel to be worked;
- a processing and control unit (6) capable of learning the shape, dimensions and orientation of the panel to be worked and capable of controlling the motors of the rotating table (1) and of the corresponding orthogonal sliders (2, 3) to move the edge of the panel so that it interacts with the cyclically positioned working unit, and capable of controlling the motor of the working unit positioning carousel (4) according to a predetermined operating program;
- the machining centre being enclosed together with accessory parts, namely components for supplying the working units (5) and the processing and control unit (6) inside a sound-proofed chamber (8), provided with apertures for the entry and exit of the panels and service hatches (108), and provided with a ventilation and air filtration system for the removal of solvents and fine particles given off by the operations of sanding, painting and drying or hardening of the paint;
- further comprising a motorized supply roller conveyor (7, 7') which passes through the entry aperture of the chamber (8) to cyclically insert into this aperture one of the panels (P) to be worked, this panel being correctly orientated and positioned against fixed references by suitable means and being picked up and transferred to the vacuum retaining means of the rotating table (1) by other suitable means, in such a way that the centre of gravity of the panel is aligned with the axis of rotation of the table, and also comprising a further motorized discharge roller conveyor (7, 7") which passes through the exit aperture of the said chamber (8) and in that it comprises means for transferring, on command, the worked panel from the said rotating table (1) to the said discharge roller conveyor, the orientation of the panel and the position of its centre of gravity with respect to the pick-up means being learnt by means of the positioning of the panel against partially fixed, partially adjustable and partially movable reference stops located on the portion of the supply roller conveyor (7, 7') which enters the chamber (8).

2. Machining centre according to Claim 1, in which the rotating table (1) and the carousel (4) with the working units (U) are positioned with their axes vertical.

3. Machining centre according to Claim 1, in which the rotating table (1) is positioned with its axis vertical, while the carousel (4) with the working units (U) is positioned with its axis having an inclination in the range from zero to ninety degrees to the vertical and has the highest or lowest point of its periphery facing the assembly of the said rotating table (1) with its orthogonal sliders (2, 3).

4. Machining centre according to Claim 1, in which the working units (U) located on the carousel (4) comprise coarse and fine sanding units (U1, U6), painting units (U2, U5) and units (U3, U4) for drying and/or hardening the painted surface.

5. Machining centre according to Claim 1, in which the working units (U) located on the positioning carousel (4) are provided with raising and lowering means (F2).

6. Machining centre according to Claim 1, in which the working units (U) located on the positioning carousel (4) are provided with means for oscillation (F3) about a horizontal axis perpendicular to the theoretical radius connecting each unit to the axis of the carousel.

7. Machining centre according to Claim 1, in which the working units (U) located on the positioning carousel (4) are provided with radial movement means (F1) for moving it away from and towards the axis of rotation of the carousel.

8. Machining centre according to Claim 1, **characterized in that** the roller conveyors for supplying and discharging the panels are replaced by a single roller conveyor (7) or by aligned roller conveyors, which pass through the chamber (8) parallel to the traversing slider (2) of the rotating table (1).

9. Machining centre according to Claim 1, **characterized in that** the roller conveyors for supplying and discharging the panels consist of separate motorized roller conveyors (7', 7"), parallel to each other and to the slider (3) of the rotating table (1) orientated in the direction of the carousel (4) with the working units (U).

10. Machining centre according to Claim 1, **characterized in that** it comprises means by which the learning of the shape and dimensions of the panel takes place by the entry of data into the processing and control unit (6).

11. Machining centre according to the preceding claims, **characterized in that** it comprises a feeler of a mechanical or opto-electronic type for determining the shape and dimensions of the panel to be worked and for transmitting the corresponding data to the processing and control unit (6).

12. Machining centre according to Claim 1, **characterized in that**, if the panel supply roller conveyor (7) is aligned with the discharge roller conveyor, the said supply roller conveyor is provided, across and above its terminal portion and inside the chamber of the centre, with two gantry structures (12, 12') which are slidable on guides (13) parallel to the longitudinal axis of the said roller conveyor and connected to a self-centring movement system, for example one of the screw and nut type (14, 14', 15, 15') with a geared motor (16) controlled by the processing and control centre (6), to position the said gantries with a distance between them correlated with the dimensions and shape of the panels to be worked, the gantry (12), under which the panel (P) to be positioned is to pass, being provided longitudinally with a retractable strip (23), of the oscillating type for example, which is raised automatically by contact with the panel and which then drops back by gravity after the transit of this panel which stops when it bears against a strip (17) fixed longitudinally to the other gantry (12'), one of the said strips being mounted on guide means (18) parallel to the longitudinal axis of the roller conveyor (7) and being connected to movement means (20) which, on command, bring the two strips towards each other to carry out a first movement of centring the panel with respect to following pick-up and transfer means, linear servo systems (27, 27') being mounted longitudinally on the cross-members of the said gantries and having their moving parts connected to oscillating stops (30, 31, 30', 31') which, after the activation of the said servo systems, push the panel positioned between the said strips (17, 23) parallel to these and against fixed and adjustable stops (26) located in the proximity of the side of the roller conveyor which faces the rotating table (1), the whole being done in such a way as to provide a second movement of centring the panel, orthogonal to the preceding movement, sensors (25) being provided to stop the roller conveyor (7) when the panel touches the said fixed strip and to cause the intervention of the said linear actuators for second positioning, and sensors, of the pressure switch type for example, being provided in the actuating cylinders of the various moving units of the said approach systems, to detect the completion of the positioning of the panel and to cause the activation of the means for picking up the panel and transferring it on to the rotating table (1).

13. Machining centre according to the preceding claims, in which the means for picking up the panel and transferring it from the supply roller conveyor (7, 7') to the rotating table (1) and then from the rotating table to the discharge roller conveyor (7, 7") comprise stations (K1, K2) remote from the carousel (4) of the working units (U), to which the said rotating table is brought, the centre having in alignment with these stations and with the said roller conveyors overhead rectilinear fixed guides (9, 9') on which there run corresponding motorized carriages (10) which carry, with interposed means of raising and lowering (11), corresponding pick-up heads (111) with vacuum gripping means, the motors for moving the said carriages being of the type with electronic speed and phase control, and being controlled by the processing and control unit (6) which ensures that the panels are picked up exactly by their centres of gravity.

## Patentansprüche

1. Automatische Bearbeitungsvorrichtung für die Kanten von Paneelen oder Oberflächen für die Möbelindustrie, mit:
- einem Drehtisch (1), mit Vakuummitteln, um das zu bearbeitende Paneel so zu halten, daß sein Schwerpunkt mit der Drehachse dieses Tisches übereinstimmt, der auf mindestens zwei horizontalen, senkrecht zueinander verlaufenden Führungs- und Schlittengruppen (2, 3) montiert ist, die jeweils von Motoren mit elektronischer Geschwindigkeits- und Phasenregelung angetrieben sind;
- ein Karussell (4), auf dem zwei oder mehr Einrichtungen (U) zum Bearbeiten der Paneelkanten in bestimmten Winkelabständen angeordnet sind, die durch präzise Drehvorrichtungen des Karussells wahlweise in eine festgelegte Annäherungsposition an den Drehtisch (1) bewegt werden können, der das zu bearbeitende Paneel trägt;
- eine Steuer- und Regeleinheit (6), die imstande ist, die Form, die Abmessungen und die Ausrichtung des zu bearbeitenden Paneels zu erlernen und die Motoren des Drehtischs (1) und der jeweiligen senkrechten Schlitten (2, 3) zu steuern, um die Kante des Paneels so zu bewegen, daß sie mit der periodisch angeordneten Bearbeitungseinrichtung zusammenwirkt, und den Antrieb des die Bearbeitungseinrichtung positionierenden Karussells (4) entsprechend einem festgelegten Betriebsprogramm zu regeln;
- Zubehörteilen, nämlich Komponenten zur Versorgung der Bearbeitungseinrichtungen (5) und der Steuer- und Regeleinheit (6), die zusammen mit der Bearbeitungsvorrichtung innerhalb einer schalldichten Kammer (8) eingeschlossen sind, die mit Öffnungen für das Ein- und Austreten der Paneele, Serviceluken (108) und mit einem Lüftungs- und Luftfiltersystem zur Entfernung von Lösungsmitteln und Feinpartikeln, die bei den Arbeitsvorgängen des Schleifens, Lackierens und Trocknens oder Aushärtens der Farbe entstehen, versehen ist;
- weiterhin einer motorisierten Zufuhrrollenbahn (7, 7'), die durch die Eingangsöffnung der Kammer (8) reicht, um periodisch eines der zu bearbeitenden Paneele (P) in diese Öffnung einzuführen, das durch geeignete Mittel richtig ausgerichtet und gegen feststehende Bezugspunkte positioniert wird sowie durch andere geeignete Vorrichtungen aufgenommen und an die Vakuumhaltevorrichtungen des Drehtischs (1) so übergeben wird, daß der Schwerpunkt des Paneels mit der Drehachse des Tisches übereinstimmt, und außerdem einer weiteren motorisierten Ausgaberollenbahn (7, 7'), die durch die Ausgangsöffnung der Kammer (8) reicht, und Mitteln zum Übergeben des bearbeiteten Paneels von dem Drehtisch (1) zu der Ausgaberollenbahn auf Anweisung, wobei die Ausrichtung des Paneels und die Lage seines Schwerpunkts in Bezug auf die Hebevorrichtungen mittels des Positionierens des Paneels gegen teilweise fixierte, teilweise anpassbare und teilweise bewegliche Referenzanschläge, die in dem Bereich der Zufuhrrollenbahn (7, 7') angeordnet sind, die in die Kammer (8) eintritt, erlernt werden.

2. Bearbeitungsvorrichtung nach Anspruch 1, bei welcher der Drehtisch (1) und das Karussell (4) mit den Bearbeitungseinrichtungen (U) mit ihren Achsen vertikal positioniert sind.

3. Bearbeitungsvorrichtung nach Anspruch 1, bei welcher der Drehtisch (1) mit seiner Achse vertikal angeordnet ist, während das Karussell (4) mit den Bearbeitungseinrichtungen (U) mit seiner Achse eine Neigung im Bereich von 0° bis 90° in Bezug zur Vertikalen aufweisend angeordnet ist und den höchsten oder niedrigsten Punkt seines Umfangs dem Aufbau auf dem Drehtisch (1) mit den orthogonalen Schlitten (2, 3) zuwendet.

4. Bearbeitungsvorrichtung nach Anspruch 1, bei welcher die auf dem Karussell (4) angeordneten Bearbeitungseinrichtungen (U), Grob- und Feinschleifvorrichtungen (U1, U6), Lackiervorrichtungen (U2, U5) und Vorrichtungen (U3, U4) zum Trocknen und/oder Aushärten der lackierten Oberfläche aufweisen.

5. Bearbeitungsvorrichtung nach Anspruch 1, bei welcher die auf dem Karussell (4) angeordneten Bearbeitungseinrichtungen (U) mit Hebe- und Senkvorrichtungen (F2) versehen sind.

6. Bearbeitungsvorrichtung nach Anspruch 1, bei welcher die auf dem Einstellungskarussell (4) angeordneten Bearbeitungseinrichtungen (U) mit Mitteln zum Pendeln (F3) um eine horizontale Achse versehen sind, die senkrecht zu dem theoretischen Radius verläuft, der jede Einrichtung mit der Achse des Karussells verbindet.

7. Bearbeitungsvorrichtung nach Anspruch 1, bei welcher die auf dem Einstellungskarussell (4) angeordneten Bearbeitungseinrichtungen (U) mit radialen Bewegungsmitteln (F1) versehen sind, um sie von der Drehachse des Karussells weg und zu dieser hin zu bewegen.

8. Bearbeitungsvorrichtung nach Anspruch 1, **dadurch gekennzeichnet, daß** die Rollenbahnen zum Zuliefern und Ausstoßen der Paneele durch eine einzige Rollenbahn (7) oder durch ausgerichtete Rollenbahnen ersetzt sind, die parallel zu dem überbrückenden Schlitten (2) des Drehtischs (1) durch die Kammer (8) verlaufen.

9. Bearbeitungsvorrichtung nach Anspruch 1, **dadurch gekennzeichnet, daß** die Rollenbahnen zum Zuliefern und Ausstoßen der Paneele aus separaten, motorisierten Rollenbahnen (7', 7'') bestehen, die zueinander und zu dem Schlitten (3) des Drehtischs (1) parallel verlaufen, der in Richtung des Karussells (4) mit den Bearbeitungseinrichtungen (U) ausgerichtet ist.

10. Bearbeitungsvorrichtung nach Anspruch 1, **dadurch gekennzeichnet, daß** sie Mittel aufweist, mit Hilfe derer das Erlernen der Form und der Abmessungen des Paneels durch die Eingabe von Daten in die Steuer- und Regeleinheit (6) erfolgt.

11. Bearbeitungsvorrichtung nach einem der vorhergehenden Ansprüche, **dadurch gekennzeichnet, daß** sie einen mechanischen oder optoelektronischen Fühler zum Bestimmen der Form und der Abmessungen des zu bearbeitenden Paneels und zur Weitergabe der entsprechenden Daten an die Steuer- und Regeleinheit (6) aufweist.

12. Bearbeitungsvorrichtung nach Anspruch 1, **dadurch gekennzeichnet, daß** im Falle einer mit der Ausgaberollenbahn gleich ausgerichteten Rollenbahn (7) für die Paneelzufuhr diese oberhalb und quer über ihrem Endbereich innerhalb der Kammer der Vorrichtung mit zwei Portalstrukturen (12, 12') versehen ist, die auf Führungen (13) parallel zu der Längsachse der Rollenbahn verschieblich sind und mit einem selbstzentrierenden Bewegungssystem verbunden sind, z. B. des Schrauben- und Mutterntyps (14, 14', 15, 15') mit einem von der Steuer- und Regeleinheit (6) gesteuerten Getriebemotor (16), um die Portale mit einem den Abmessungen und der Form der zu bearbeitenden Paneele entsprechenden Abstand zu positionieren, und das Portal (12), unter dem das zu positionierende Paneel (P) passieren soll, in Längsrichtung mit einer einklappbaren, beispielsweise pendelnden Leiste (23) versehen ist, die bei Kontakt mit dem Paneel automatisch angehoben wird und durch die Schwerkraft nach dem Passieren des Paneels wieder herunter fällt, welches anhält, wenn es gegen eine Leiste (17) drückt, die an dem anderen Portal (12') in Längsrichtung fixiert ist, wobei eine der beiden Leisten auf parallel zu der Längsachse der Rollenbahn (7) verlaufenden Führungsvorrichtungen (18) montiert ist und mit Bewegungsmitteln (20) verbunden ist, die auf Anweisung die beiden Leisten aufeinander zu bewegen, um in Bezug zu folgenden Aufnahme- und Übergabemitteln eine erste Zentrierbewegung des Paneels auszuführen, lineare Steuersysteme (27, 27') längs auf den Querelementen der Portale montiert sind und ihre bewegliche Teile mit pendelnden Anschlägen (30, 31, 30', 31') verbunden sind, die nach der Aktivierung der Servosysteme das Paneel, das zwischen den Leisten (17, 23) angeordnet ist, parallel zu diesen gegen fixierte und anpassbare Anschläge (26) drücken, die in der Nähe der Seite der Rollenbahn angeordnet sind, die zum Drehtisch (1) zeigt, wobei das Ganze so ausgeführt ist, daß eine zweite Zentrierbewegung des Paneels geschaffen wird, die senkrecht zu der vorhergehenden Bewegung ist, Sensoren (25) vorgesehen sind, um die Rollenbahn (7) anzuhalten, wenn das Paneel die fixierte Leiste berührt, und um den Eingriff der linearen Stellorgane für das zweite Positionieren auszulösen, und Sensoren in den Stellzylindern der verschiedenen Bewegungseinrichtungen des Annäherungssystems vorgesehen sind, beispielsweise in der Art eines Druckschalters, um den Abschluß des Positionierens des Paneels zu erfassen und um die Ansteuerung der Vorrichtungen zum Aufnehmen und Übergeben des Paneels an den Drehtisch (1) zu bewirken.

13. Bearbeitungsvorrichtung nach den vorhergehenden Ansprüchen, bei welcher die Mittel zum Aufnehmen und Übergeben des Paneels von der Zufuhrrollenbahn (7, 7') an den Drehtisch (1) und dann von dem Drehtisch an die Ausstoßrollenbahn (7, 7'') entfernt von dem Karussell (4) und den Bearbeitungseinrichtungen (U) liegende Stationen (K1, K2) aufweisen, zu denen der Drehtisch gebracht wird, wobei die Bearbeitungsvorrichtung zu diesen Stationen und zu den Rollenbahnen ausgerichtete, oberhalb befestigte, geradlinige Führungen (9, 9') aufweist, auf denen jeweils motorisierte Tragschlitten (10) laufen, die mittels zwischenliegender Hebe- und Absenkvorrichtungen (11) jeweils Aufnahmeköpfe (111) mit Vakuumgreifern tragen, wobei die Motoren zum Bewegen der Tragschlitten mit elektronischer Geschwindigkeits- und Phasenregelung versehen und von der Steuer- und Regeleinheit (6) gesteuert sind, die gewährleistet, daß die Paneele genau an ihren Schwerpunkten angehoben werden.

## Revendications

1. Centre d'usinage automatique pour les bords de panneaux ou de surfaces pour l'industrie du meuble, comprenant:
- une table rotative (1), comportant des moyens d'aspiration conçus pour supporter le panneau à travailler de telle sorte que son centre de gravité soit aligné avec l'axe de rotation de cette table, qui est montée sur au moins deux groupes de guides et coulisseaux horizontaux (2, 3), orthogonaux entre eux, ces moyens étant entraînés par des moteurs correspondants ayant une commande électronique de vitesse et de phase;
- un carrousel (4) sur lequel deux unités (U), ou plus, destinées au travail des bords des panneaux, sont disposées à intervalles angulaires prédéterminés, et peuvent être déplacées de manière sélective par des moyens de rotation précis du carrousel, jusqu'à une position prédéterminée d'approche de la table rotative (1) portant le panneau à travailler;
- une unité de traitement et de commande (6) capable d'apprendre la forme, les dimensions et l'orientation du panneau à travailler, capable de commander les moteurs de la table rotative (1) et les coulisseaux orthogonaux (2, 3) correspondants de manière à déplacer le bord du panneau de telle sorte qu'il interagisse avec l'unité de travail positionnée de manière cyclique, et capable de commander le moteur du carrousel (4) de positionnement de l'unité de travail en fonction d'un programme d'exploitation prédéterminé;
- le centre d'usinage étant enfermé avec des parties auxiliaires, à savoir des composants pour l'alimentation des unités de travail (5) et de l'unité de traitement et de commande (6), à l'intérieur d'une chambre insonorisée (8), pourvue d'ouvertures pour l'entrée et la sortie des panneaux et de trappes d'accès (108), et pourvue d'un système de ventilation et de filtration d'air pour l'élimination des solvants et des fines particules émises par les opérations de sablage, de peinture et de séchage ou durcissement de la peinture;
- comprenant, en outre, un transporteur à rouleaux d'amenée motorisé (7, 74) qui passe par l'ouverture d'entrée de la chambre (8) de manière à faire entrer de manière cyclique dans cette ouverture l'un des panneaux (P) à travailler, ce panneau étant orienté et positionné correctement contre des références fixes par des moyens appropriés, et étant saisi et transféré vers les moyens de retenue par aspiration de la table rotative (1) par d'autres moyens appropriés, de telle sorte que le centre de gravité du panneau soit aligné avec l'axe de rotation de la table, et comprenant également un autre transporteur à rouleaux de déchargement motorisé (7, 7'), qui passe par l'ouverture de sortie de ladite chambre (8), des moyens étant prévus pour le transfert, sur commande, du panneau travaillé de ladite table rotative (1) sur ledit transporteur à rouleaux de déchargement, l'orientation du panneau et la position de son centre de gravité par rapport aux moyens de saisie étant apprises par l'intermédiaire du positionnement du panneau contre des butées de référence partiellement fixes, partiellement réglables et partiellement mobiles, situées sur la partie du transporteur à rouleaux d'amenée (7, 7') qui pénètre dans la chambre (8).

2. Centre d'usinage selon la revendication 1, dans lequel la table rotative (1) et le carrousel (4) ayant les unités de travail (U) sont positionnés en ayant leurs axes verticaux.

3. Centre d'usinage selon la revendication 1, dans lequel la table rotative (1) est positionnée en ayant son axe vertical, tandis que le carrousel (4) ayant les unités de travail (U) est positionné en ayant son axe présentant une certaine inclinaison, comprise entre zéro et quatre-vingt-dix degrés, par rapport à la verticale, et a le point le plus haut ou le plus bas de sa périphérie dirigé vers l'ensemble constitué par ladite table rotative (1) et ses coulisseaux orthogonaux (2, 3).

4. Centre d'usinage selon la revendication 1, dans lequel les unités de travail (U) situées sur le carrousel (4) comprennent des unités de sablage grossier et fin (U1, U6), des unités de peinture (U2, U5) et des unités (U3, U4) pour le séchage et/ou le durcissement de la surface peinte.

5. Centre d'usinage selon la revendication 1, dans lequel les unités de travail (U) situées sur le carrousel de positionnement (4) sont pourvues de moyens de soulèvement et d'abaissement (F2).

6. Centre d'usinage selon la revendication 1, dans lequel les unités de travail (U) situées sur le carrousel de positionnement (4) sont pourvues de moyens (F3) d'oscillation autour d'un axe horizontal perpendiculaire au rayon théorique raccordant chaque unité à l'axe du carrousel.

7. Centre d'usinage selon la revendication 1, dans lequel les unités de travail (U) situées sur le carrousel de positionnement (4) sont pourvues de moyens (F1) de déplacement radial, pour les éloigner et les rapprocher de l'axe de rotation du carrousel.

8. Centre d'usinage selon la revendication 1, **caractérisé en ce que** les transporteurs à rouleaux pour amener et décharger les panneaux sont remplacés par un unique transporteur à rouleaux (7) ou par des transporteurs à rouleaux alignés, qui traversent la chambre (8) parallèlement aux coulisseaux de déplacement (2) de la table rotative (1).

9. Centre d'usinage selon la revendication 1, **caractérisé en ce que** les transporteurs à rouleaux pour amener et décharger les panneaux sont constitués de transporteurs à rouleaux motorisés distincts (7, 7'), parallèles l'un à l'autre et au coulisseau (3) de la table rotative (1) orienté dans la direction du carrousel (4) ayant les unités de travail (U).

10. Centre d'usinage selon la revendication 1, **caractérisé en ce qu'**il comprend des moyens par lesquels l'apprentissage de la forme et des dimensions du panneau se fait par l'introduction de données dans l'unité de traitement et de commande (6).

11. Centre d'usinage selon les revendications précédentes, **caractérisé en ce qu'**il comprend un palpeur du type mécanique ou optoélectronique pour déterminer la forme et les dimensions du panneau à travailler et transmettre les données correspondantes à l'unité de traitement et de commande (6).

12. Centre d'usinage selon la revendication 1, **caractérisé en ce que**, si le transporteur à rouleaux d'amenée de panneaux (7) est aligné avec le transporteur à rouleaux de déchargement, ledit transporteur à rouleaux d'amenée est pourvu, en travers et au-dessus de sa partie terminale et à l'intérieur de la chambre du centre, de deux structures de portique (12, 12') pouvant coulisser sur des guides (13) parallèles à l'axe longitudinal dudit transporteur à rouleaux et reliés au système de déplacement d'auto-centrage, par exemple l'un étant du type vis et écrou (14, 14', 15, 15') avec un moteur à train d'engrenages (16) commandé par le centre de traitement et de commande (6), pour positionner lesdits portiques avec une distance entre eux corrélée aux dimensions et à la forme des panneaux à travailler, le portique (12), sous lequel passe le panneau (P) à positionner, étant pourvu dans la direction longitudinale d'une baguette rétractable (23), de type oscillant par exemple, qui est soulevée automatiquement par contact avec le panneau et qui retombe ensuite sous l'effet de la gravité après le passage de ce panneau, qui s'arrête lorsqu'il appuie contre une baguette (17), fixée dans la direction longitudinale à l'autre portique (12'), l'une desdites baguettes étant montée sur des moyens de guidage (18) parallèles à l'axe longitudinal du transporteur à rouleaux (7) et étant reliés à des moyens de déplacement (20) qui, sur commande, amènent les deux baguettes l'une vers l'autre pour effectuer un premier déplacement de centrage du panneau par rapport aux moyens de saisie et de déplacement qui suivent, des systèmes d'asservissement linéaires (27, 27') étant montés longitudinalement sur les éléments transverses desdits portiques et ayant leurs parties mobiles reliées à des butées oscillantes (30, 31, 30', 31') qui, après l'activation desdits systèmes d'asservissement, poussent le panneau positionné entre lesdites baguettes (17, 23) parallèlement à celles-ci et contre des butées fixes et réglables (26) situées à proximité du côté du transporteur à rouleaux qui fait face à la table rotative (1), le tout étant effectué de façon à produire un deuxième déplacement de centrage du panneau, orthogonal au déplacement précédent, des capteurs (25) étant prévus pour arrêter le transporteur à rouleaux (7) lorsque le panneau touche ladite baguette fixe et pour provoquer l'intervention desdits actionneurs linéaires pour le deuxième positionnement, et des capteurs, du type pressostat par exemple, étant prévus dans les vérins d'actionnement des différentes unités mobiles desdits systèmes d'approche, pour détecter l'achèvement du positionnement du panneau et provoquer l'activation des moyens destinés à saisir le panneau et à le transférer sur la table rotative (1).

13. Centre d'usinage selon les revendications précédentes, dans lequel moyens destinés à saisir le panneau et à le transférer du transporteur à rouleaux d'amenée (7, 7') sur la table rotative (1), puis de la table rotative au transporteur à rouleaux de décharge (7, 7') comprennent des postes (K1, K2) distants du carrousel (4) des unités de travail (U), jusqu'auxquels est amenée ladite table rotative, le centre ayant, en alignement avec ces postes et avec lesdits transporteurs à rouleaux, des guides fixes rectilignes aériens (9, 9') sur lesquels courent des chariots motorisés correspondants (10), qui transportent, par des moyens interposés d'élévation et d'abaissement (11), des têtes de saisie correspondantes (111) ayant des moyens de prise par aspiration, les moteurs pour le déplacement desdits chariots étant du type comprenant une commande électronique de vitesse et de phase, et étant commandés par l'unité de traitement et de commande (6), ce qui garantit que les panneaux soient saisis exactement par leur centre de gravité.
